(19) **Europäisches Patentamt / European Patent Office / Office européen des brevets**

(11) **EP 2 102 527 B1**

(12) **FASCICULE DE BREVET EUROPEEN**

(45) Date de publication et mention de la délivrance du brevet:
**01.12.2010 Bulletin 2010/48**

(21) Numéro de dépôt: **07872462.2**

(22) Date de dépôt: **07.12.2007**

(51) Int Cl.:
*F16H 3/12* (2006.01)          *F16H 61/04* (2006.01)
*B60W 20/00* (2006.01)

(86) Numéro de dépôt international:
**PCT/FR2007/052461**

(87) Numéro de publication internationale:
**WO 2008/090293 (31.07.2008 Gazette 2008/31)**

(54) **PROCEDE DE CHANGEMENT DE RAPPORT DANS UNE BOITE DE VITESSES, NOTAMMENT POUR VEHICULES HYBRIDES**

VERFAHREN ZUR ÄNDERUNG DER GANGSTUFE IN EINEM GETRIEBE, IM WESENTLICHEN FÜR HYBRIDFAHRZEUGE

METHOD FOR CHANGING THE GEAR RATIO IN A GEARBOX ESSENTIALLY FOR HYBRID VEHICLES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **15.12.2006 FR 0655536**

(43) Date de publication de la demande:
**23.09.2009 Bulletin 2009/39**

(73) Titulaire: **Peugeot Citroën Automobiles SA**
**78140 Vélizy-Villacoublay (FR)**

(72) Inventeurs:
- **SIEGFRIED, Adrien**
  **F-92250 La Garenne Colombes (FR)**
- **GAULLY, Bruno**
  **F-91630 Marolles en Hurepoix (FR)**

(56) Documents cités:
**EP-A- 1 209 017      EP-A2- 1 127 731**
**EP-A2- 1 167 833      US-B1- 6 319 168**

**Description**

La présente invention concerne un procédé de changement de rapport dans une boîte de vitesses. Elle s'applique notamment à des boîtes de vitesse équipant des véhicules hybrides. Plus généralement, elle s'applique par exemple à des véhicules équipés d'une chaîne de traction électrique.

EP 12 09 017 divulgue les caractéristiques du préambule de la revendication 1.

Actuellement, les véhicules automobiles hybrides utilisent des machines électriques pour entraîner la boîte de vitesses et transmettre le couple moteur aux roues motrices des véhicules. Une boîte de vitesses permet d'obtenir plusieurs rapports de démultiplication entre le moteur électrique et la roue. La chaîne de traction comporte donc un mécanisme de changement de rapport qui permet soit d'obtenir un couple important au niveau des roues motrices, soit d'atteindre la vitesse maximale. Se pose alors le problème d'effectuer le changement de rapport en prenant en compte l'augmentation de l'inertie liée à l'introduction de la machine électrique sur l'arbre primaire.

Un but de l'invention est notamment de surmonter le problème précité. A cet effet, l'invention a pour objet un procédé de changement de rapport dans une boîte de vitesses équipant un véhicule ayant au moins deux roues motrices chacune étant entraînée par une chaîne de traction comportant une machine électrique entraînant un arbre primaire, la machine électrique étant solidaire mécaniquement de l'arbre primaire, une roue étant entraînée par un arbre secondaire, un changement de rapport comportant une phase de synchronisation suivie d'une phase de dévirage dans laquelle un manchon lié à un arbre se couple par frottement à une bague apte à s'effacer sous l'action du couple produit par le manchon pour permettre au manchon de s'engager dans un pignon fou lié à l'autre arbre, dans la phase de dévirage la machine électrique étant commandée pour produire un couple supplémentaire $C_{MEL}$ sur l'arbre primaire, fonction au moins de sa propre inertie.

Le couple supplémentaire $C_{MEL}$ est, par exemple, donné par la relation suivante :

$$C_{MEL} = \frac{Id\omega}{dt}$$

où la grandeur I est au moins la somme des moments d'inertie des pièces mécaniques en rotation liées à la machine électrique.

Avantageusement, la grandeur I représente par exemple la somme des moments d'inertie des pièces de la chaîne de traction en rotation.

Dans un mode de mise en oeuvre, le couple supplémentaire $C_{MEL}$ peut comporter en outre une composante due à la traînée de la boîte de vitesses du véhicule, selon les relations suivantes :

pour un passage descendant :

$$C_{MEL} = \frac{Id\omega}{dt} + C_{Traînée}$$

pour un passage montant :

$$C_{MEL} = \frac{Id\omega}{dt} - C_{Traînée}$$

$C_{Traînée}$ étant le couple de traînée de la boîte de vitesses.

La grandeur I représente par exemple les moments d'inertie dans un repère lié au pignon fou.

Avantageusement, le véhicule peut être un véhicule hybride.

L'invention a pour principaux avantages qu'elle est simple à mettre en oeuvre, ne nécessitant pas l'ajout ou la modification de pièces mécaniques notamment, et qu'elle est économique.

D'autres avantages et caractéristiques de l'invention apparaîtront à l'aide de la description qui suit faite en regard de dessins annexés qui représentent :

- la figure 1, un schéma fonctionnel d'un exemple de chaîne de traction d'un véhicule hybride ;
- la figure 2, une illustration des pièces mises en jeu dans une boîte de vitesses lors des phases de synchronisation puis de dévirage d'un changement de rapport ;
- la figure 3, une illustration de la formation d'un couple de synchronisation lors d'un changement de rapport ;
- la figure 4, une illustration du couple de dévirage ;
- la figure 5, une illustration des efforts appliqués sur une bague de synchronisation ;
- les figures 6a, 6b et 6c, une illustration des étapes d'une phase de dévirage.

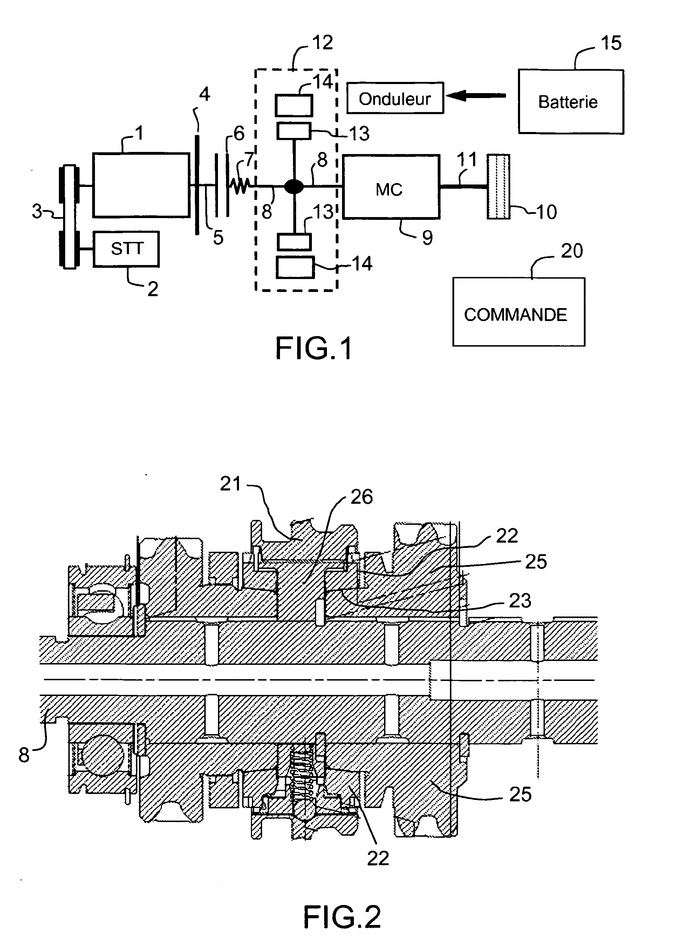

La figure 1 présente un schéma fonctionnel d'un exemple de chaîne de traction d'un véhicule hybride. Elle comporte un moteur thermique 1 couplé par exemple à une machine auxiliaire électrique 2, au moyen d'une courroie 3 entraînée par des poulies 3', 3" solidaires l'une du moteur l'autre de la machine auxiliaire, cette machine auxiliaire permettant le redémarrage du moteur dans un mode dit « stop and go ». Cette dernière ne participe pas directement à la traction du véhicule.

Un volant d'inertie 4 est fixé sur l'arbre de sortie 5 du moteur thermique 1. L'arbre de sortie est de son côté couplé au vilebrequin du moteur. L'arbre de sortie est ensuite relié à l'embrayage 6. Ce dernier effectue un mouvement de glissement 7 dans la direction de l'arbre de sortie 5 pour passer d'une position ouverte à une position fermée ou vice-versa. L'embrayage est par ailleurs relié à l'arbre primaire 8. Cet arbre primaire 8 relie l'arbre de sortie moteur 5 à une boîte de vitesses mécanique pilotée 9 (BVMP), lorsque l'embrayage est en position fermée. Cette BVMP assure la transmission de la puissance motrice aux roues 10, dont une seule est représentée sur la figure 1. Plus particulièrement, la BVMP 9 transmet, après démultiplication, la puissance de sortie aux roues 10 par l'intermédiaire d'un arbre de sortie 11, ou arbre secondaire.

Une machine électrique de traction 12 est insérée en série entre l'embrayage 6 et la boîte mécanique pilotée 9. Cette machine électrique de traction 11 comporte un rotor 13 et un stator 14. Le rotor 13 est solidaire de l'arbre primaire 8 et le stator 14, fixe, est par exemple solidaire du carter du moteur. Une batterie 15 ou un ensemble de batteries, de forte puissance, alimente en énergie électrique la machine de traction 12 via un onduleur 16. Ce dernier permet de transformer la tension continue en sortie de batterie en tension alternative apte à entraîner le rotor 13 en rotation.

Une unité de commande 20 associée à des capteurs, non représentés, pilote la chaîne de traction associée à la roue 10. L'unité de commande pilote notamment la machine électrique 12. Les capteurs permettent notamment de mesurer les différentes vitesses de rotation en jeu dans la chaîne de traction. Avec une telle architecture de chaîne de traction, le véhicule peut notamment fonctionner selon les modes suivants :

- le véhicule roule en mode thermique pur lorsque l'embrayage 6 est fermé et que la machine électrique de traction 12 n'est pas alimentée ou commandée, le moteur thermique 1 assurant seul la traction ;
- le véhicule roule en mode électrique pur lorsque l'embrayage 6 est ouvert et que la machine électrique 12 est alimentée ou commandée pour assurer seule la traction du véhicule ;
- le véhicule roule en mode mixte lorsque le moteur thermique 1 assure la traction du véhicule assisté par la machine électrique 12, l'embrayage 6 étant fermé.

La machine électrique 12 fixée sur l'arbre primaire 8 de la boîte de vitesses 9 impose une contrainte importante. En effet, la contrainte de la machine électrique est son inertie importante. Cette inertie supplémentaire équivaut par exemple à rajouter une douzaine d'embrayages. Elle peut conduire notamment à des impossibilités de changements de rapport ou à des temps de passage trop longs d'un rapport à l'autre. En effet, un changement de rapport comprend une phase de synchronisation de la vitesse moteur et de la vitesse de transmission des roues. Une fois que ces vitesses sont synchronisées, l'arbre de transmission de la vitesse moteur peut être couplé à l'arbre de transmission de la vitesse des roues. Cette phase de synchronisation est suivie d'une phase de dévirage au cours de laquelle l'effacement d'une bague, dite bague de synchronisation, doit être effectué pour permettre le couplage d'un manchon, solidaire par exemple de l'arbre de transmission de la vitesse des roues motrices, et d'un pignon fou, solidaire par exemple de l'arbre de transmission de la vitesse moteur. L'inertie supplémentaire produite par la machine électrique 12 peut retarder, voire empêcher l'effacement de la bague de dévirage, donc le changement de rapport.

En d'autres termes, pour réaligner le pignon fou lors d'une phase de dévirage notamment, il est nécessaire de fournir des efforts très importants par rapport à une architecture classique, ces efforts n'étant pas toujours suffisants.

L'invention permet d'optimiser le changement de rapport, en permettant dans tous les cas le déverrouillage de la bague de synchronisation lors de la phase de dévirage, malgré l'inertie importante de la machine électrique 12.

La figure 2 illustre les pièces mises en jeu dans la boîte de vitesses 9 lors de la phase de synchronisation puis dans la phase de dévirage. Le dévirage est la phase au cours de laquelle une bague de synchronisation se déverrouille après synchronisation des vitesses de part et d'autre.

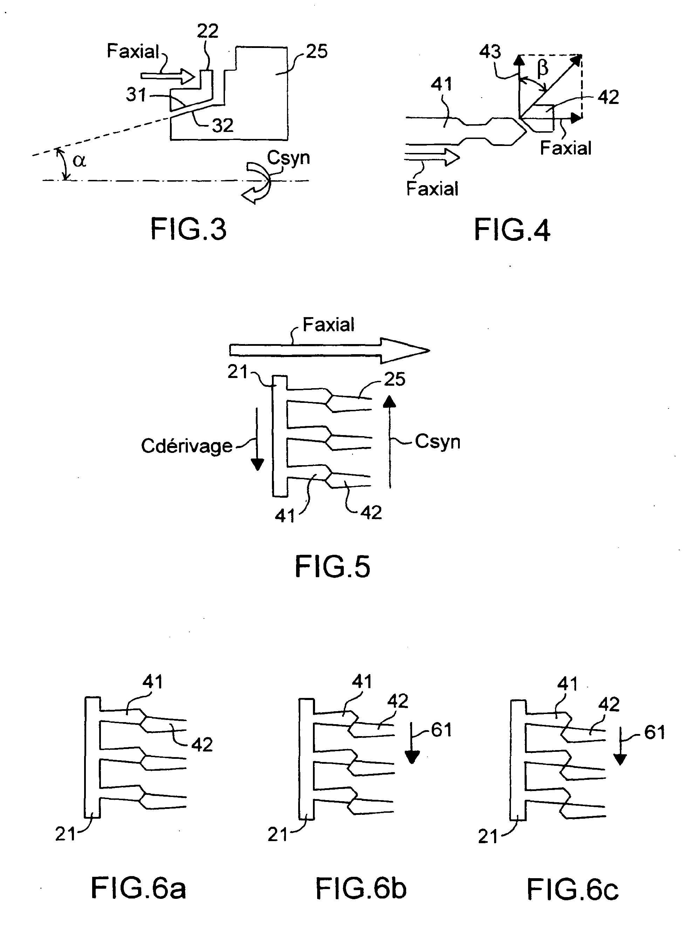

Un manchon 21 coopère avec la bague de synchronisation 22 ayant une terminaison conique, cette bague étant encore appelée bague de dévirage. Le manchon 21 est fixé sur un moyeu 26 lié à l'arbre secondaire 11 (non représenté sur la figure 2) dans le cas où la bague de synchronisation 22 est liée à l'arbre secondaire. Il est lié à l'arbre primaire 8 dans le cas contraire. Le mouvement du manchon est produit par un actionneur situé dans la boîte de vitesses, non représenté. Sous l'action de ce dernier le manchon crée une poussée axiale $F_{axial}$ (figure 3).

La bague de synchronisation possède une surface de contact 31 sur sa partie inférieure qui permet de transmettre un couple entre la bague et le pignon fou 25 lors de l'application de l'effort produit par le manchon sur ses dents, non représentées. Ce pignon fou 25 est fou sur l'arbre primaire 8 lorsque le manchon est sur l'arbre primaire (le pignon fou est relié à l'arbre secondaire par l'intermédiaire de l'autre pignon solidaire du secondaire).

Le pignon fou 25 est fou sur l'arbre secondaire quand le manchon est sur l'arbre secondaire.

La bague de synchronisation joue un rôle de tampon dans la mesure où elle permet au manchon 21 d'appliquer un couple lié à l'effort de régime moteur, c'est-à-dire au différentiel de vitesse entre les arbres primaire et secondaire. En effet, lors d'un changement de rapport il est prévu de réajuster la vitesse de rotation du moteur de traction 1, 12, entraînant l'arbre primaire 8 à un niveau compatible de la vitesse de la roue 10, entraînée par l'arbre secondaire, lorsque la chaîne de traction utilisera le rapport que l'on envisage de sélectionner. C'est l'opération de synchronisation. Lors de cette synchronisation la différence de régime entre l'arbre primaire, relié au pignon fou 25, et l'arbre secondaire, relié au manchon 21, crée un couple qui s'oppose à l'avancée du manchon, ce couple sera appelé par la suite couple de synchronisation. L'effort $F_{axial}$ produit par le manchon, encore appelé effort menant, crée un couple qui tend à faire tourner la bague de synchronisation 22 pour libérer le passage du manchon. Ce couple, qui sera appelé par la suite couple de dévirage, est lié à la géométrie des dents du manchon et de la bague.

La figure 3 illustre la formation du couple de synchronisation $C_{syn}$. L'effort axial $F_{axial}$, ou effort menant précité, est produit sur la bague de synchronisation 22 par la poussée du manchon.

Comme indiqué précédemment ce couple $C_{syn}$ s'oppose à l'avancée du manchon 21. Ce couple est donné par la relation suivante :

$$C_{syn} = \frac{F_{axial} \, x D_{c\hat{o}ne} \, x Cf_{c\hat{o}ne}}{2 \sin \alpha} \qquad (1)$$

où :

- $D_{c\hat{o}ne}$ représente le diamètre de la bague de synchronisation 22 au niveau de la surface de contact avec le pignon fou 25 ;
- $Cf_{c\hat{o}ne}$ représente le coefficient de frottement entre la bague de synchronisation 22 et le pignon fou 25 ;
- $\alpha$ représente l'angle du cône formé par les surfaces de contact 31, 32 de la bague et du pignon fou.

La figure 4 illustre le couple de dévirage $C_{devirage}$. Plus particulièrement, la figure 4 présente une dent 41 du manchon 21 et une dent 42 de la bague de synchronisation en regard l'une de l'autre. Dans la phase de synchronisation, les dents 41, 42 entrent en contact. Les terminaisons des dents sont coniques. Elles entrent en contact par les surfaces de ces terminaisons coniques. Il en résulte le couple de dévirage donné par la relation suivante, produit par l'effort $F_{axial}$ appliqué par le manchon sur la bague de synchronisation :

$$C_{d\acute{e}virage} = \frac{F_{axial} \, x D_{rampe}}{2 \tan \beta} \qquad (2)$$

où :

- $D_{rampe}$ représente le diamètre de la bague de synchronisation 22 au niveau de la surface de contact avec le pignon fou 25 ;
- $\beta$ est l'angle des cônes de contact par rapport à la normale 43 à leur axe de déplacement.

La figure 5 illustre le bilan des forces lors d'une synchronisation, c'est-à-dire lors du mouvement du manchon et de l'application de l'effort $F_{axial}$. Plus particulièrement, la figure 5 représente les dents 41, 42 du manchon et de la bague de synchronisation en contact. La figure 5 montre que les sens des efforts produits d'une part par le couple de dévirage et d'autre part par le couple de synchronisation sont opposés. Ainsi, lorsque le couple de synchronisation est inférieur au couple de dévirage, la bague 22 pivote et le manchon 21 chemine sur les rampes pour avancer et terminer l'engagement.

Les figures 6a, 6b et 6c illustrent les étapes du dévirage dans le cas tel que décrit précédemment où le couple de synchronisation est inférieur au couple de dévirage.

La figure 6a représente la fin de la synchronisation et le début du dévirage. Les dents 41, 42 du manchon et de la bague de synchronisation sont en contact au niveau de leurs terminaisons coniques.

La figure 6b représente la phase de dévirage proprement dite. Les terminaisons coniques des dents 41, 42 sont toujours en contact mais glissent l'une par rapport à l'autre sous l'effet de la poussée $F_{axial}$. Une flèche 61 représente le sens du mouvement de la bague.

La figure 6c représente la fin du dévirage. La bague ayant continué son mouvement 61 sous l'effet de la poussée produite par l'effort $F_{axial}$, elle déverrouille le passage du manchon qui peut ainsi continuer sa course et terminer son engagement dans le pignon fou 25 dans la phase suivante dite de crabotage.

Sur une boîte de vitesses classique manuelle ou robotisée, l'effort de dévirage est notamment lié à l'inertie des pièces qu'il est nécessaire de faire tourner pour déverrouiller la bague de synchronisation. Ainsi, plus l'inertie est importante, plus l'effort pour dévirer est important. Le couple de traînée de la boîte influe aussi sur l'effort à produire, ce couple de traînée est notamment dû au frottement des pièces mécaniques dans l'huile à l'intérieur de la boîte de vitesses et aux différents roulements en jeu.

Dans le cas d'un véhicule hybride, la machine électrique de traction 12 est montée sur l'arbre primaire 8. L'effort de dévirage nécessaire pour engager le rapport tel qu'illustré par les figures 6a à 6c est alors considérablement augmenté du fait de l'inertie importante de la machine électrique 12, le couple de traînée étant par ailleurs augmenté du fait du couple de traînée propre de la machine électrique.

Selon l'invention, la machine électrique de traction 12 est pilotée pour compenser sa propre inertie ainsi que la traînée de la boîte de vitesses. Plus particulièrement, la machine électrique 12 est commandée pour injecter sur l'arbre primaire un couple supplémentaire qui compense sa propre inertie. Le couple injecté peut aussi par exemple compenser l'effort de traînée supplémentaire à vaincre. Ainsi, l'invention asservit le couple supplémentaire fourni par la machine électrique pour déverrouiller la bague de synchronisation 22.

Lorsque le manchon 21 est sur le primaire (le pignon fou et la bague de synchronisation sur le primaire également) : le couple supplémentaire Cmel produit par la machine électrique tend à faire pivoter le manchon pour faciliter l'engagement et l'effacement de la bague de synchronisation.

Lorsque le manchon 21 est sur le secondaire (le pignon fou et la bague de synchronisation sur le secondaire également) : le couple supplémentaire Cmel produit par la machine électrique tend à faire pivoter le pignon récepteur pour faciliter l'engagement et l'effacement de la bague de synchronisation.

Pour effectuer cet asservissement, l'unité de commande 20 dispose notamment des données suivantes :

- le type de boîte de vitesses qui permet de connaître les inerties des pièces en rotation, notamment les pièces de la machine électriques 12 ;
- l'acquisition du régime de l'arbre primaire 8, c'est-à-dire sa vitesse de rotation qui est fournie par des capteurs de vitesse reliés à l'unité de commande, déjà présents dans une boîte de vitesses robotisée, avantageusement cette vitesse de rotation correspond à la vitesse de la machine électrique 12 directement solidaire de l'arbre 8 ;

- la fin de la phase de synchronisation qui correspond à l'instant où le couple de synchronisation $C_{syn}$ devient nul, cette information étant par exemple donnée par une mesure de course de l'actionneur, cette synchronisation peut encore être définie à l'aide de capteurs de vitesse, la fin de la synchronisation correspondant à l'égalisation des vitesses entre les parties primaire 8 et secondaire 11 ;
- l'effort $F_{axial}$ produit par l'actionneur pour engager un changement de rapport ;
- le couple de traînée $C_{Trainée}$ calculé à partir de la mesure de régime de l'arbre primaire, cette mesure se déduit classiquement de la mesure de la chute de régime de l'arbre primaire définie par la différence entre le régime moteur et le régime cible théorique à atteindre, la différence définissant la traînée.

Ainsi, le couple $C_{MEL}$ à injecter par la machine électrique 12 pour assurer le déverrouillage de la bague de synchronisation 22 est donné par la relation suivante, pour un passage descendant :

$$C_{MEL} = \frac{I d\omega}{dt} + C_{Trainée} \qquad (3)$$

ou par la relation suivante, pour un passage montant :

$$C_{MEL} = \frac{Id\omega}{dt} - C_{Traînée} \qquad\qquad (4)$$

La valeur I représente la somme des moments d'inertie des pièces en rotation, notamment celle associées à la machine électrique 12. Le moment d'inertie I est ramené au niveau du pignon fou 25. Il dépend donc des rapports de démultiplication en jeu selon que le pignon fou est au primaire ou au secondaire. Il est d'autant plus grand que les rapports sont élevés. ω représente la vitesse de rotation de l'arbre primaire et donc de la machine électrique.

Pour mieux assurer le déverrouillage de la bague de synchronisation, le moment d'inertie I pleut être la somme des moments d'inertie des pièces mécanique composant la machine électrique mais aussi des moments d'inertie des autres pièces en jeu et en rotation lors d'un changement de rapport.

Avantageusement, la boîte de vitesses étant pilotée, le type de changement de rapport est connu : soit montant, soit descendant. Ainsi, il est possible de connaître quel flanc de la bague de synchronisation va rencontrer le manchon et donc quel signe appliquer sur le couple de traînée.

L'invention a été décrite pour un véhicule hybride mais elle peut s'appliquer à un véhicule à traction entièrement électrique.

## Revendications

1. Procédé de changement de rapport dans une boîte de vitesses (9) équipant un véhicule ayant au moins deux roues motrices (10) chacune étant entraînée par une chaîne de traction (8, 12, 9, 11) comportant une machine électrique (12) entraînant un arbre primaire (8), la machine électrique (12) étant solidaire mécaniquement de l'arbre primaire (8), une roue (10) étant entraînée par un arbre secondaire (11), un changement de rapport comportant une phase de synchronisation suivie d'une phase de dévirage dans laquelle un manchon (21) lié à un arbre (8, 11) se couple par frottement à une bague (22) apte à s'effacer sous l'action du couple produit par le manchon pour permettre au manchon de s'engager dans un pignon fou (25) lié à l'autre arbre (8, 11), **caractérisé en ce que** dans la phase de dévirage la machine électrique (12) est commandée pour produire un couple supplémentaire $C_{MEL}$ sur l'arbre primaire (8) fonction au moins de sa propre inertie.

2. Procédé selon la revendication 1, **caractérisé en ce que** le couple supplémentaire $C_{MEL}$ est donné par la relation suivante :

$$C_{MEL} = \frac{Id\omega}{dt}$$

où la grandeur I est au moins la somme des moments d'inertie des pièces mécaniques en rotation liées à la machine électrique (12).

3. Procédé selon la revendication 2, **caractérisé en ce que** la grandeur I représente la somme des moments d'inertie des pièces de la chaîne de traction en rotation.

4. Procédé selon l'une quelconque des revendications 2 ou 3, **caractérisé en ce que** le couple supplémentaire $C_{MEL}$ comporte en outre une composante due à la traînée de la boîte de vitesses du véhicule, selon les relations suivantes :

pour un passage descendant :

$$C_{MEL} = \frac{Id\omega}{dt} + C_{Traînée}$$

pour un passage montant :

$$C_{MEL} = \frac{Id\omega}{dt} - C_{Traînée}$$

$C_{Traînée}$ étant le couple de traînée de la boîte de vitesses.

5. Procédé selon l'une quelconque des revendications précédentes, **caractérisé en ce que** la grandeur I représente les moments d'inertie dans un repère lié au pignon fou (25).

6. Procédé selon l'une quelconque des revendications précédentes, **caractérisé en ce que** le véhicule est un véhicule hybride.

**Claims**

1. Method for changing the gear ratio in a gearbox (9) mounted in a vehicle having at least two driving wheels (10) each driven by a traction chain (8, 12, 9, 11) that comprises an electric machine (12) driving a primary shaft (8), the electric machine (12) being mechanically connected to the primary shaft (8), a wheel (10) being driven by a secondary shaft (11), a gear ratio change including a synchronisation phase followed by a counter-rotation phase in which a sleeve (21) connected to a shaft (8, 11) is coupled by friction to a ring (22) suitable for withdrawal under the action of the torque generated by the sleeve so that the sleeve can engage in an idle sprocket (25) connected to the other shaft (8, 11), **characterised in that**, during the counter-rotation phase, the electric machine (12) is controlled so as to generate an additional torque $C_{MEL}$ on the primary shaft (8) that is a function at least of the inertia thereof.

2. Method according to claim 1, **characterised in that** the additional torque $C_{MEL}$ is given by the following equation:

$$C_{MEL} = \frac{Id\omega}{dt}$$

where the value I is at least the sum of the moments of inertia of the rotating mechanical parts connected to the electric machine (12).

3. Method according to claim 2, **characterised in that** the quantity I represents the sum of the moments of inertia of the rotating parts of the traction chain.

4. Method according to any of claims 2 or 3, **characterised in that** the additional torque $C_{MEL}$ further comprises a component due to the drag of the vehicle gearbox, according to the following equations:

for a downward passage:

$$C_{MEL} = \frac{Id\omega}{dt} + C_{Drag}$$

for an upward passage:

$$C_{MEL} = \frac{Id\omega}{dt} - C_{Drag}$$

where $C_{Drag}$ is the gearbox drag torque.

5. Method according to any of the above claims, **characterised in that** the quantity I represents the moments of inertia in a reference point connected to the idle sprocket (25).

6. Method according to any of the above claims, **characterised in that** the vehicle is a hybrid vehicle.

**Patentansprüche**

1. Verfahren für den Gangwechsel in einem Schaltgetriebe (9), das in einem Fahrzeug mit mindestens zwei Treibrädern (10) angeordnet ist, die jeweils von einer Antriebskette (8, 12, 9, 11) angetrieben werden, die eine elektrische Maschine (12) umfasst, die eine Hauptwelle (8) antreibt, wobei die elektrische Maschine (12) mit der Hauptwelle (8) mechanisch fest verbunden ist, wobei ein Rad (10) von einer Nebenwelle (11) angetrieben wird, wobei ein Gangwechsel eine Synchronisationsphase gefolgt von einer Rücklaufphase umfasst, in der sich eine Muffe (21), die mit einer Welle (8, 11) verbunden ist, durch Reibung an einen Ring (22) koppelt, der imstande ist, unter der Wirkung des Drehmoments, das von der Muffe erzeugt wird, zurückzutreten, um der Muffe zu ermöglichen, in ein Losrad (25) einzugreifen, das mit der anderen Welle (8, 11) verbunden ist, **dadurch gekennzeichnet, dass** in der Rücklaufphase die elektrische Maschine (12) gesteuert wird, um ein zusätzliches Drehmoment $C_{MEL}$ auf der Hauptwelle (8) zu erzeugen, das mindestens von ihrer eigenen Trägheit abhängig ist.

2. Verfahren nach Anspruch 1, **dadurch gekennzeichnet, dass** das zusätzliche Drehmoment $C_{MEL}$ durch die folgende Formel ausgedrückt wird:

$$C_{MEL} = \frac{Id\omega}{dt}$$

wobei die Größe I mindestens die Summe der Trägheitsmomente der in Rotation befindlichen mechanischen Teile, die mit der elektrischen Maschine (12) verbunden sind, ist.

3. Verfahren nach Anspruch 2, **dadurch gekennzeichnet, dass** die Größe I die Summe der Trägheitsmomente der in Rotation befindlichen Teile der Antriebskette darstellt.

4. Verfahren nach einem der Ansprüche 2 oder 3, **dadurch gekennzeichnet, dass** das zusätzliche Drehmoment $C_{MEL}$ ferner eine Komponente umfasst, die auf dem Widerstand des Schaltgetriebes des Fahrzeugs gründet, und zwar nach folgenden Formeln:

für eine absteigende Passage:

$$C_{MEL} = \frac{Id\omega}{dt} + C_{Widerstand}$$

für eine aufsteigende Passage:

$$C_{MEL} = \frac{Id\omega}{dt} - C_{Widerstand}$$

wobei $C_{Widerstand}$ das Drehmoment des Widerstands des Schaltgetriebes ist.

5. Verfahren nach einem der vorhergehenden Ansprüche, **dadurch gekennzeichnet, dass** die Größe I die Trägheitsmomente in einem Bezugspunkt darstellt, die mit dem Losrad (25) verbunden ist.

6. Verfahren nach einem der vorhergehenden Ansprüche, **dadurch gekennzeichnet, dass** das Fahrzeug ein Hybrid-fahrzeug ist.

FIG.1

FIG.2

Faxial

22

25

31

32

α

Csyn

**FIG.3**

43

41

β

42

Faxial

Faxial

**FIG.4**

Faxial

21

25

Cdérivage

Csyn

41

42

**FIG.5**

41

42

21

**FIG.6a**

41

42

61

21

**FIG.6b**

41

42

61

21

**FIG.6c**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1209017 A